# EUROPÄISCHE PATENTANMELDUNG

(11) **EP 4 497 538 A1**
(43) Veröffentlichungstag der Anmeldung: **29.01.2025**
(21) Anmeldenummer: 24170517.7
(22) Anmeldetag: 16.04.2024
(51) Int. Cl.: B23Q 17/09

(54) **VORRICHTUNG UND VERFAHREN ZUR BERÜHRUNGSLOSEN BRUCH- UND / ODER VERSCHLEISSÜBERWACHUNG**

(30) Priorität: 27.07.2023 DE 102023207162
(71) Anmelder: Dr. Johannes Heidenhain GmbH, 83301 Traunreut (DE)
(72) Erfinder: SCHNEIDER, Johannes, 83278 Traunstein (DE); HEUMANN, Martin, 83278 Traunstein (DE); HUBER, Christian, 83549 Eiselfing (DE)

(57) **Zusammenfassung**

Die Erfindung betrifft eine Vorrichtung und ein Verfahren zur berührungslosen Bruchüberwachung und ergänzend oder alternativ zur berührungslosen Verschleißüberwachung in einer Werkzeugmaschine. Die Vorrichtung umfasst einen Sensor und zumindest einen Magnetfeldgenerator. Mithilfe des Sensors misst die Vorrichtung lokale Änderungen der magnetischen Flussdichte in einem definierten Messabstand und wertet mittels einer elektronischen Auswerteeinheit das Messsignal elektronisch aus. Der Sensor ist derart ausgebildet, dass seine längste Ausdehnung in eine Raumrichtung höchstens 500 µm beträgt, wobei durch den Sensor ein Magnetfeld in zumindest einer Raumrichtung messbar ist.

## Beschreibung

### GEBIET DER TECHNIK

Die Erfindung betrifft eine Vorrichtung und ein Verfahren zur berührungslosen Erkennung von Bruch- und Verschleißerscheinungen an ferromagnetischen Werkzeugen gemäß dem unabhängigen Anspruch 1 beziehungsweise dem unabhängigen Anspruch 7.

Wenn eine Werkzeugmaschine mit einem Werkzeug zum spanenden Bearbeiten eines Werkstücks ausgestattet ist und ein Werkstück hinsichtlich seiner geometrischen Form bearbeitet, kann es am Werkzeug zu unerwarteten und unvorhersehbaren Schäden in Form eines Totalbruchs oder zu kleineren Ausbrüchen an den Schneidkanten kommen. Kommt es beispielsweise zu einem Totalbruch des Werkzeugs, führt dies neben einer schlagartigen Belastung der Werkzeugmaschine auch häufig zu einer Beschädigung des Werkstücks. Bleibt ein solcher Totalbruch des Werkzeugs unbemerkt, kommt es zudem in aller Regel zu einer mangelhaften Bearbeitung der Werkstücke in den Folgeschritten der entsprechenden Werkzeugmaschine, was wiederum zu einer unerwünscht hohen Ausschussrate führt. Auch Verschleißerscheinungen in Form kleiner Defekte oder Ausbrüche kann sich negativ auf die Werkstückbearbeitung auswirken.

Daher ist eine Vorrichtung zur frühzeitigen Erkennung von Bruch- und / oder Verschleißerscheinungen einer der wichtigsten Faktoren zur Vermeidung von Schäden an einer Werkzeugmaschine und zur Verbesserung der Zuverlässigkeit während der Bearbeitung.

### STAND DER TECHNIK

Aus der Patentanmeldung DE 36 08 572 A ist ein Verfahren zur berührungslosen Bruch- und Verschleißüberwachung von Werkzeugen bekannt, bei dem die Lageänderung zweier benachbarter und mit schwachen Magneten versehenen Maschinenteile, von denen zumindest eines durch die Zerspanung mit Kräften beaufschlagt wird, kontinuierlich induktiv gemessen und überwacht wird. Die Verformung eines Werkzeugs, eines Werkzeugträgers oder des Werkzeuggrundhalters wird dabei als Maß für den Verschleiß des Werkzeugs verwendet, da mit zunehmendem Verschleiß die Kraft auf das Werkzeug zunimmt.

Nachteilig bei diesem Verfahren ist, dass die Überwachung der Bruch- und Verschleißerscheinungen am Werkzeug durch das indirekte Messverfahren relativ ungenau ist, da nur größere Ausbrüche am Werkzeug erkannt werden können. Eine Überwachung der lokalen Schneidgeometrie ist mit diesem Verfahren gar nicht möglich.

### ZUSAMMENFASSUNG DER ERFINDUNG

Der Erfindung liegt die Aufgabe zugrunde eine Vorrichtung und ein Verfahren bereitzustellen, durch welche ein ferromagnetisches Werkzeug zuverlässig und berührungslos auf Bruch- und / oder Verschleiß überprüfbar ist. Dabei ist die Vorrichtung verschmutzungsunempfindlich sowie kostengünstig in der Herstellung und es soll gleichzeitig eine relativ hohe Messgenauigkeit erreicht werden.

Diese Aufgabe wird erfindungsgemäß durch die Merkmale der Ansprüche 1 und 7 gelöst. Vorteilhafte Ausgestaltungen und Weiterbildungen sind in den jeweils abhängigen Ansprüchen angegeben.

Die erfindungsgemäße Vorrichtung ist zur berührungslosen Bruchüberwachung und ergänzend oder alternativ zur Verschleißüberwachung von ferromagnetischen Werkzeugen in einer Werkzeugmaschine geeignet. Die Vorrichtung umfasst einen Sensor und zumindest einen Magnetfeldgenerator, der beispielsweise als ein Permanentmagnet ausgebildet sein kann. Die Vorrichtung misst dabei mithilfe des Sensors lokale Änderungen der magnetischen Flussdichte in einem definierten Messabstand und wertet mittels einer Auswerteeinheit das Messsignal elektronisch aus. Der Sensor ist derart ausgebildet, dass die längste Ausdehnung der sensitiven Fläche in einer Raumrichtung höchstens 500 µm beträgt, wobei durch den Sensor ein Magnetfeld in zumindest einer Raumrichtung messbar ist.

Gemäß einer vorteilhaften Weiterbildung der Erfindung können der zumindest eine Magnetfeldgenerator und der Sensor entlang einer Geraden angeordnet sein, welche parallel oder orthogonal zur Längsachse des ferromagnetischen Werkzeugs verläuft.

In weiterer Ausgestaltung ist der Sensor und der zumindest eine Magnetfeldgenerator in einem Gehäuse der Vorrichtung angeordnet, wobei der zumindest eine Magnetfeldgenerator derart im Gehäuse positioniert ist, dass dessen magnetisches Vorspannfeld durch den zumindest einen Sensor hindurch verläuft und in das ferromagnetische Werkzeug eingekoppelt wird.

Mit Vorteil umfasst der Sensor zumindest ein Hall-Element und ergänzend oder alternativ zumindest ein TMR-Element.

Gemäß einer vorteilhaften Weiterbildung der Erfindung ist der Sensor in der Lage, neben einer Messung der magnetischen Flussdichte zumindest eine weitere physikalische Größe zu erfassen.

Bei der physikalischen Größe kann es sich beispielsweise um eine Zustandsgröße wie Druck, Temperatur, usw. handeln. Beispielsweise kann es sich um Temperaturwerte handeln, die innerhalb des feldempfindlichen Bereichs des Sensors gemessen wurden, insbesondere solche, die im Zusammenhang mit dem ferromagnetischen Werkzeug stehen.

Mit Vorteil ist die Vorrichtung ausgebildet, um Verschmutzungen an der Vorrichtung und ergänzend oder alternativ am ferromagnetischen Werkzeug mittels Druckluft und ergänzend oder alternativ mittels magnetischem Wechselfeld zu entfernen.

Gemäß einem weiteren Aspekt umfasst die Erfindung ein Verfahren zur berührungslosen Bruchüberwachung und ergänzend oder alternativ zur Verschleißüberwachung eines ferromagnetischen Werkzeugs in einer Werkzeugmaschine durch eine Vorrichtung. Die Vorrichtung umfasst einen punktförmig messenden Sensor und zumindest einen Magnetfeldgenerator. Das Verfahren umfasst folgende Schritte:
- Relatives Annähern von ferromagnetischem Werkzeug und der Vorrichtung;
- Einkoppeln eines magnetischen Vorspannfeldes in das ferromagnetische Werkzeug;
- Messen der magnetischen Flussdichte des durch das ferromagnetische Werkzeug modulierten Magnetfelds in zumindest einer Raumrichtung;
- Korrigieren und Auswerten des Messignals zur Bestimmung der Geometrie des ferromagnetischen Werkzeugs.

Insbesondere durch die spezielle punktförmige Ausgestaltung des Sensors ist eine hohe Auflösung der Messergebnisse erreichbar.

In weiterer Ausgestaltung erfolgen die Signalkorrektur und die Signalauswertung elektronisch innerhalb der Vorrichtung.

Mit Vorteil wird das Ergebnis der Signalauswertung nach Abschluss an eine Speichereinheit und ergänzend oder alternativ an eine Ausgabeeinheit überm ittelt.

Gemäß einer vorteilhaften Weiterbildung wird zusätzlich zumindest eine der folgenden Größen bestimmt:
- Raumposition des ferromagnetischen Werkzeugs;
- Messabstand des ferromagnetischen Werkzeugs zum Sensor;
- Winkelstellung des ferromagnetischen Werkzeugs;
- Rotationsgeschwindigkeit des ferromagnetischen Werkzeugs;
- Durchmesser und ergänzend oder alternativ Länge des ferromagnetischen Werkzeugs;
- Temperatur des ferromagnetischen Werkzeugs.

Mit Vorteil erfolgt bei stationärer Anordnung der Vorrichtung eine relative Bewegung des ferromagnetischen Werkzeugs in wenigstens eine Raumrichtung während eines Annäherungsvorgangs und ergänzend oder alternativ eines Messvorgangs. Das ferromagnetische Werkzeug kann dabei um die eigene Längsachse relativ rotieren. Im Falle einer stationären Anordnung des ferromagnetischen Werkzeugs kann sich die Vorrichtung während eines Annäherungsvorgangs und ergänzend oder alternativ eines Messvorgangs relativ in zumindest einer Raumrichtung um das ferromagnetische Werkzeug bewegen, wobei das ferromagnetische Werkzeug um die eigene Längsachse rotiert. Alternativ oder ergänzend kann die Bewegung der Vorrichtung auch auf einer Bahnkurve um das ferromagnetische Werkzeug geschehen, wobei das ferromagnetische Werkzeug um die eigene Längsachse rotiert.

In weiterer Ausgestaltung umfasst die Auswertung folgende Schritte:
- Abrufen oder Berechnen eines Soll-Verlaufs zumindest einer Soll-Größe des ferromagnetischen Werkzeugs;
- Vergleichen des abgerufenen oder berechneten Soll-Verlaufs mit einem gemessenen Ist-Verlauf zumindest einer Ist-Größe des ferromagnetischen Werkzeugs;
- Bei Feststellung einer Abweichung:
   - Bestimmung des Grads der Abweichung und
   - Bei Überschreiten eines definierten Schwellwertes: Durchführung einer Tiefenanalyse der Messung und ergänzend oder alternativ Abbruch der Messung und ergänzend oder alternativ Abbruch der Werkstückbearbeitung.

Mit Vorteil berücksichtigt der Schwellwert zusätzlich zumindest eine der folgenden Größen:
- Raumposition des ferromagnetischen Werkzeugs;
- Messabstand des ferromagnetischen Werkzeugs zum Sensor;
- Winkelstellung des ferromagnetischen Werkzeugs;
- Rotationsgeschwindigkeit des ferromagnetischen Werkzeugs;
- Durchmesser und ergänzend oder alternativ Länge des ferromagnetischen Werkzeugs;
- Temperatur des ferromagnetischen Werkzeugs.

Gemäß einer vorteilhaften Weiterbildung werden die Daten der Messung bei der Tiefenanalyse hinsichtlich Verschleißformen, Verschleißparameter, Position und Zustand der Schneidkanten, Position und Zustand der Spanräume, der Werkstoffzusammensetzung, der Spananhaftung und ergänzend oder alternativ einer Intensitätsverteilung des ferromagnetischen Werkzeugs ausgewertet.

Die Erfindung wird nachstehend auch hinsichtlich weiterer Merkmale und Vorteile anhand der Beschreibung von Ausführungsbeispielen und unter Bezugnahme auf die beiliegenden, schematischen Zeichnungen näher erläutert.

### KURZE BESCHREIBUNG DER ZEICHNUNGEN

Es zeigen:
- Fig. 1: eine stark schematisierte Darstellung eines Ausführungsbeispiels der erfindungsgemäßen Vorrichtung;
- Fig. 2: eine stark schematisierte Darstellung des Messprinzips der erfindungsgemäßen Vorrichtung in einer Schnittansicht;
- Fig. 3: zwei Messungen eines ferromagnetischen Werkzeugs mit einem beispielhaften ersten und zweiten Ist-Verlauf;
- Fig. 4: eine Messung eines ferromagnetischen Werkzeugs mit einem beispielhaften dritten Ist-Verlauf;
- Fig. 5: eine schematische Darstellung des erfindungsgemäßen Verfahrens als Ablaufdiagramm;
- Fig. 6: eine schematische Darstellung der in Fig. 5 im Schritt "Auswerten" umfassten Teilschritte.

### BESCHREIBUNG DER AUSFÜHRUNGSFORMEN

Einige spezifische Ausführungsformen der vorliegenden Erfindung werden im Folgenden unter Bezugnahme der Zeichnungen genauer beschrieben.

Die erfindungsgemäße Vorrichtung 1 eignet sich zum Einsatz im Arbeitsraum von Werkzeugmaschinen, bei denen ein ferromagnetisches Werkzeug 4 auf Bruch- und ergänzend oder alternativ Verschleißerscheinungen überprüft werden soll. Das ferromagnetische Werkzeug 4 wird hierzu relativ an die Vorrichtung 1 bewegt und eine Messung der magnetischen Flussdichte durchgeführt.

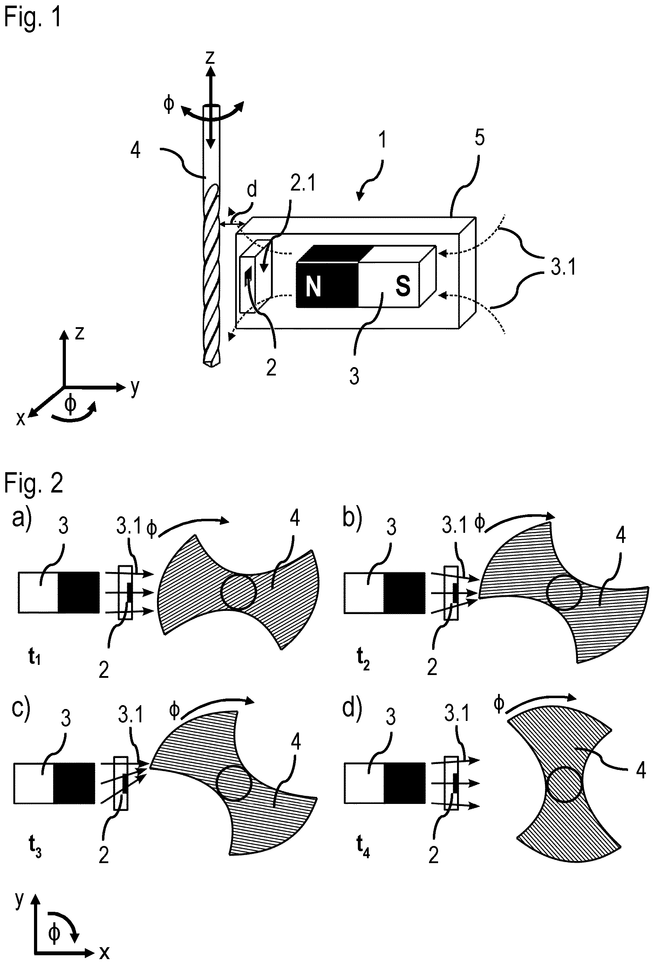

In der Figur 1 ist das ferromagnetische Werkzeug 4 und die erfindungsgemäße Vorrichtung 1 dargestellt, welche ein Gehäuse 5, ein Trägerelement 2.1 mit Sensor 2 sowie einen Magnetfeldgenerator 3 umfasst. Im vorgestellten Ausführungsbeispiel befinden sich der Sensor 2 und der Magnetfeldgenerator 3 im Gehäuse 5 der erfindungsgemäßen Vorrichtung 1. Der Sensor 2 ist an jenem distalen Ende der Vorrichtung 1 angeordnet, welches sich in unmittelbarer Nähe zum ferromagnetischen Werkzeug 4 befindet, wobei ein definierter minimaler Messabstand d in Form eines Luftspalts zwischen dem ferromagnetischen Werkzeug 4 und der Vorrichtung 1 vorhanden ist.

Insbesondere ist es vorteilhaft, wenn der Sensor 2 zwischen dem Magnetfeldgenerator 3 und dem ferromagnetischen Werkzeug 4 auf einer Geraden angeordnet ist, welche orthogonal zur Längsachse des ferromagnetischen Werkzeugs 4 liegt. Abweichend kann das ferromagnetische Werkzeug 4 auch zwischen dem zumindest einen Magnetfeldgenerator 3 und dem Sensor 2 angeordnet sein, wobei das ferromagnetische Werkzeug 4, der Sensor 2 und der zumindest eine Magnetfeldgenerator 3 weiterhin auf einer Geraden liegen.

Die Gerade - entlang der sich der zumindest eine Magnetfeldgenerator 3 und der Sensor 2 befinden - kann somit auch parallel zur Längsrichtung des ferromagnetischen Werkzeugs 4 verlaufen, wobei in diesem Fall nur der Sensor 2 und der zumindest eine Magnetfeldgenerator 3 auf der zur Längsachse des ferromagnetischen Werkzeugs 4 parallel verlaufenden Geraden liegen. Der Sensor 2 sollte in diesem Fall idealerweise näher am Werkzeugträger des ferromagnetischen Werkzeugs 4 angeordnet sein als der zumindest eine Magnetfeldgenerator 3.

Der Messabstand d definiert den Abstand zwischen der Oberfläche der Vorrichtung 1 und dem Flugkreis der maximalen peripheren Teile eines Querschnitts des ferromagnetischen Werkzeugs 4. Der Messabstand d wird dabei in der Regel so gewählt, dass ein geringer Luftspalt zwischen 200 µm und 300 µm zwischen der Vorrichtung 1 und dem ferromagnetischen Werkzeug 4 verbleibt. Der Messabstand d kann somit während jedes Prüfvorgangs konstant sein oder alternativ variiert werden, beispielsweise in Abhängigkeit des Durchmessers des ferromagnetischen Werkzeugs 4 oder der aktuellen Temperatur des ferromagnetischen Werkzeugs 4 beziehungsweise dessen Umgebungstemperatur.

Unter einem ferromagnetischen Werkzeug 4 sind hierbei Werkzeuge zur Fertigung von Werkstücken zu verstehen, bei denen eine Werkzeugmaschine die relative(n) Bewegung(en) zwischen der Vorrichtung 1 und dem ferromagnetischen Werkzeug 4 im Arbeitsraum der Werkzeugmaschine vorgibt oder beeinflusst. Insbesondere sind hierunter ein- und mehrschneidige Werkzeuge für spanende Fertigungsverfahren zu verstehen, welche Schneidstoffe mit ferromagnetischen Eigenschaften besitzen. Hierzu zählen beispielsweise Bohrer, Fräswerkzeuge, Reibahlen, Räumwerkzeuge, Drehmeißel oder Wendeschneidplatten aus Werkzeugstahl oder Hartmetall.

Das ferromagnetische Werkzeug 4 kann beispielsweise durch die Werkzeugmaschine in alle drei Raumrichtungen x, y, z bewegt sowie um dessen Längsachse definiert rotiert werden (φ-Richtung).

In das ferromagnetische Werkzeug 4 wird ein magnetisches Vorspannfeld des zumindest einen Magnetfeldgenerators 3 eingekoppelt, so dass das vom ferromagnetischen Werkzeug 4 modulierte Magnetfeld erzeugt wird. Das vom ferromagnetischen Werkzeug 4 modulierte Magnetfeld ist charakteristisch hinsichtlich der lokalen magnetischen Flussdichte in Abhängigkeit von der lokalen Querschnittsgeometrie des ferromagnetischen Werkzeugs 4. So kommt es an den Schneidkanten zur Konzentration von Magnetfeldlinien und somit zu einer erhöhten magnetischen Flussdichte. In den Spanräumen des ferromagnetischen Werkzeugs 4 herrscht hingegen eine vergleichsweise geringe magnetische Flussdichte, was eine Unterscheidung von Schneidkanten und Spanräumen ermöglicht.

Der Sensor 2 ist in der Lage, die magnetische Flussdichte im definierten Messabstand d in wenigstens einer Raumrichtung x, y, z zu messen. Die Messung erfolgt dabei punktförmig, wobei die Auflösung der Messung durch die sensitive Fläche des Sensors 2 vorgegeben ist. Die sensitive Fläche besitzt in der Raumrichtung x, y, z mit der längsten Ausdehnung vorteilhafterweise eine Abmessung kleiner 500 µm, insbesondere kleiner 200 µm und vorteilhafterweise kleiner 100 µm. Die Abmessungen der sensitiven Fläche des Sensors 2 ist maßgeblich für die räumliche Auflösung des Sensors 2. Die Bandbreite des Sensors 2 beschreibt die (analoge) Messfrequenz und liegt vorteilhafterweise bei mindestens 10 kHz.

Die Vorrichtung 1 nimmt eine Messung der magnetischen Flussdichte mit genau einem Sensor in drei Raumrichtungen x, y, z vor. Der Sensor 2 kann hierzu beispielsweise drei sensitive Flächen umfassen, wobei diese aus drei zueinander orthogonal angeordneten Hall-Elementen oder ergänzend oder alternativ TMR-Elementen bestehen können, welche eine Messung der magnetischen Flussdichte in den drei Raumrichtungen x, y, z ermöglichen. Es kann jedoch auch nur eine Messung der magnetischen Flussdichte in eine oder zwei Raumrichtungen x, y, z vorgenommen werden. Die Wahl der Raumrichtung(en) x, y, z ist dabei situationsabhängig, d. h. beispielsweise abhängig von der relativen Lage der Vorrichtung 1 zum ferromagnetischen Werkzeug 4, wobei stets jene Raumrichtung(en) x, y, z in die Messung bzw. Auswertung einfließt/einfließen, welche das/die zuverlässigste/n Messsignal(e) liefert/liefern.

Unter einem Hall-Element ist ein Halleffektelement zu verstehen, welches beispielsweise als Halbleiterbauelement realisiert sein kann. Das Hall-Element ist insbesondere dazu in der Lage zumindest eine Hall-Spannung zu messen, mit deren Hilfe auf zumindest eine lokale Richtungskomponente eines Magnetfelds geschlossen werden kann.

Unter einem TMR-Element ist ein Element zu verstehen, welches den Tunnelmagnetwiderstand-Effekt (*tunnel magnetoresistance effect*) nutzt, um wenigstens eine lokale Richtungskomponente eines Magnetfelds zu bestimmen. Das TMR-Element kann darüber hinaus als Teil eines Halbleiterbauelements realisiert sein.

Die Vorrichtung 1 kann vorteilhafterweise neben der magnetischen Flussdichte zusätzlich eine weitere physikalische Größe erfassen. Bei dieser physikalischen Größe kann es sich insbesondere um Temperaturwerte handeln. Hierzu kann entweder innerhalb des Sensors 2 ein Temperaturmesselement vorgesehen sein oder alternativ auf dem Trägerelement 2.1 ein Temperaturmesselement vorgesehen sein. Dabei kann entweder die Temperatur im Bereich des Sensors 2 gemessen werden, z. B. durch einen Thermistor, oder innerhalb des feldempfindlichen Bereichs des Sensors 2, z. B. durch ein Mikrobolometer-Element oder Pyrometer.

Während eines Annäherungsvorgangs wird das ferromagnetische Werkzeug 4 an das Ende der Vorrichtung 1 gefahren, an dem sich der Sensor 2 befindet. Anschließend wird eine Messung der magnetischen Flussdichte des im Messabstand d befindlichen ferromagnetischen Werkzeugs 4 durch den Sensor 2 durchgeführt. Das ferromagnetische Werkzeug 4 kann während des Messvorgangs beispielsweise in z-Richtung bewegt werden. Ergänzend oder alternativ kann das ferromagnetische Werkzeug 4 auch um dessen Längsachse rotiert werden.

Die magnetischen Feldlinien 3.1 des Magnetfeldgenerators 3 koppeln in das ferromagnetische Werkzeug 4 ein, sobald es sich im magnetischen Vorspannfeld des Magnetfeldgenerators 3 befindet. Die eingekoppelten Feldlinien 3.1 richten sich anschließend in Abhängigkeit der lokalen Querschnittsgeometrie des ferromagnetischen Werkzeugs 4 definiert aus, d. h. mit lokal charakteristischer magnetischer Flussdichte. Durch den Sensor 2 wird dieses nun modulierte Magnetfeld bezüglich zumindest einer der drei Raumrichtungen x, y, z gemessen und ausgewertet.

Der Magnetfeldgenerator 3 kann als Permanentmagnet oder als Elektromagnet ausgebildet sein, wobei die Vorrichtung 1 mehr als einen Magnetfeldgenerator 3 umfassen kann. Sind mehr als ein Magnetfeldgenerator 3 vorgesehen, können diese identisch oder unterschiedlich ausgebildet sein, d. h. die Vorrichtung 1 kann beispielsweise einen Permanentmagneten und einen Elektromagneten als Magnetfeldgeneratoren 3 umfassen.

Ein derartiger Elektromagnet umfasst eine elektromagnetische Spule mit definierter Wicklungsanzahl, in der sich bei Stromfluss ein magnetisches Feld ausbildet. In der Regel umfasst die elektromagnetische Spule zusätzlich zumindest einen (offenen) Kern aus einem magnetisch weichen Material (z. B. Eisen), welches das magnetische Feld führt und verstärkt. Fließt ein Gleichstrom durch die elektromagnetische Spule, kann die Vorrichtung bei Bedarf einfach von magnetischen Spänen gereinigt werden, indem die Stromversorgung des Elektromagneten unterbrochen wird und die gegebenenfalls anhaftende Späne und der Metallstaub manuell oder automatisiert entfernt werden (z. B. durch Druckluft). Alternativ kann ein Wechselstrom durch die elektromagnetische Spule fließen. Eine manuelle oder automatisierte Reinigung der Vorrichtung 1 und ergänzend oder alternativ des ferromagnetischen Werkzeugs 4 ist in diesem Fall nicht zwingend notwendig, da durch den periodisch und wiederholt stattfindenden Phasenwechsel im Mittel eine Neutralisation der Magnetisierung der Späne und des Metallstaubs stattfindet. Um ein besonders gutes Reinigungsergebnis zu erzielen kann auch eine Kombination aus einer Druckluftreinigung und einer Reinigung mittels magnetischem Wechselfeld vorgenommen werden.

Gemäß eines zweiten Ausführungsbeispiels, welches in den Figuren nicht näher dargestellt ist, kann die Vorrichtung 1 zwei Magnetfeldgeneratoren 3 aufweisen, wobei einer für die Erzeugung des magnetischen Vorspannfeldes zuständig ist und der zweite Magnetfeldgenerator für die Entmagnetisierung der Vorrichtung 1 und ergänzend oder alternativ des ferromagnetischen Werkzeugs 4. Der zweite Magnetfeldgenerator kann dabei entweder in der Vorrichtung 1 - z. B. in Form eines Elektromagneten - oder außerhalb der Vorrichtung 1 - z. B. in Form eines Elektromagneten mit einer stufenweise abklingenden Magnetisierung - angeordnet sein.

Bei stationärer Anordnung der Vorrichtung 1 im Arbeitsraum einer Werkzeugmaschine erfolgt eine relative Bewegung des ferromagnetischen Werkzeugs 4 in wenigstens eine Raumrichtung x, y, z während eines Annäherungsvorgangs und ergänzend oder alternativ eines Messvorgangs. Das ferromagnetische Werkzeug 4 kann dabei insbesondere um die eigene Längsachse relativ rotieren. Im Falle einer stationären Anordnung des ferromagnetischen Werkzeugs 4 im Arbeitsraum einer Werkzeugmaschine kann die Vorrichtung 1 während eines Annäherungsvorgangs und ergänzend oder alternativ eines Messvorgangs relativ in zumindest einer Raumrichtung x, y, z um das ferromagnetische Werkzeug 4 bewegt werden, wobei das ferromagnetische Werkzeug 4 um die eigene Längsachse rotiert. Alternativ oder ergänzend kann dies auf einer Bahnkurve um das ferromagnetische Werkzeug 4 geschehen, wobei das ferromagnetische Werkzeug 4 insbesondere um die eigene Längsachse rotiert. In diesem Fall kann die Vorrichtung 1 beispielsweise an einem Roboterarm eines Industrieroboters als Endeffektor angebracht sein, welcher in mehreren Freiheitsgraden bewegt werden kann.

Die Vorrichtung 1 kann dabei stationär an eine Werkzeugmaschine gekoppelt sein - beispielsweise an einen Frästisch einer Fräsmaschine - und das ferromagnetische Werkzeug 4 kann durch lineares Verfahren an die stationäre Vorrichtung 1 herangefahren werden, wobei das ferromagnetische Werkzeug 4 bei Bedarf gleichzeitig mit einer definierten Drehzahl rotieren kann.

Alternativ kann das ferromagnetische Werkzeug 4 stationär an eine Werkzeugmaschine gekoppelt sein - beispielsweise an einen Spindelstock einer Drehmaschine - und die Vorrichtung 1 durch lineares Verfahren - beispielsweise an einem Schlitten - zum ferromagnetischen Werkzeug 4 herangeführt werden.

Wie in Figur 1 gezeigt erfolgt die Einkopplung der magnetischen Feldlinien 3.1 eines Permanentmagneten 3 in das ferromagnetische Werkzeug 4 gemäß eines ersten Ausführungsbeispiels durch den Sensor 2 hindurch. Der Einfluss des magnetischen Vorspannfeldes des Permanentmagneten 3 wird im Zuge einer Signalauswertung bzw. Signalkorrektur kompensiert, so dass bei der Generierung eines Ist-Verlaufs der magnetischen Flussdichte nur das modulierte Magnetfeld des ferromagnetischen Werkzeugs 4 berücksichtig wird.

Figur 2 zeigt in stark schematisierter Darstellung den Einkoppelvorgang des Magnetfelds des Permanentmagneten 3 der Vorrichtung 1 in das um seine Längsachse rotierende ferromagnetische Werkzeug 4. Die Einkopplung des magnetischen Vorspannfelds in das ferromagnetische Werkzeug 4 hängt dabei stark vom Drehwinkel φ bzw. der lokalen Position der Schneidkanten und der Spanräume in jedem infinitesimal breiten Längs- bzw. Querschnitt des ferromagnetischen Werkzeugs 4 ab.

Bei der folgenden Erläuterung der Figuren 2a bis 2d gilt für den betrachteten Querschnitt des ferromagnetischen Werkzeugs 4, dass z konstant ist und φ im Uhrzeigersinn variiert wird.

Figur 2a zeigt dabei einen Querschnitt durch das ferromagnetische Werkzeug 4 zum Zeitpunkt t₁, wobei das Profil des ferromagnetischen Werkzeugs 4 derart ausgerichtet ist, dass die Magnetfeldlinien 3.1 des Permanentmagneten 3 näherungsweise parallel zur x-Achse und durch den Sensor 2 hindurch in das ferromagnetische Werkzeug 4 einkoppeln.

Zum Zeitpunkt t₂ in Figur 2b hat sich die Winkelposition des dargestellten Querschnitts des ferromagnetischen Werkzeugs 4 aus Figur 2a um wenige Winkelgrad geändert, was eine charakteristische Auslenkung der Magnetfeldlinien 3.1 des Permanentmagneten 3 zur Folge hat. Diese koppeln nun verstärkt in jenen Teilbereich des Querschnitts des ferromagnetischen Werkzeugs 4 ein, welcher den geringsten Messabstand d besitzt, was dort zu einer Erhöhung der magnetischen Flussdichte führt.

Dieser Effekt ist noch deutlicher in Figur 2c ausgeprägt, welche das Einkoppeln der Magnetfeldlinien 3.1 zum Zeitpunkt t₃ zeigt. Zu diesem Zeitpunkt ist das ferromagnetische Werkzeug 4 erneut einige Winkelgrad weitergewandert und nunmehr ein noch kleiner Teilbereich des ferromagnetischen Werkzeugs 4 mit einem minimalen Messabstand d vorhanden, was zu einer noch höheren magnetischen Flussdichte in diesem Teilbereich führt.

Schließlich sind die Schneidkanten des ferromagnetischen Werkzeugs 4 in Figur 2d in einem maximalen Messabstand d entfernt, sodass ein Spanraum gegenüber dem Sensor 2 liegt. Die Magnetfeldlinien 3.1 des Permanentmagneten 3 fächern sich bei einer solchen Winkelstellung des ferromagnetischen Werkzeugs 4 charakteristisch auf und koppeln über einen vergleichsweise großen Teilbereich in das ferromagnetische Werkzeug 4 ein.

Die Änderungen des Magnetfelds, insbesondere hinsichtlich Stärke und Richtung, wird in Abhängigkeit der relativen Winkelposition φ zwischen dem ferromagnetischen Werkzeug 4 und dem Sensor 2 gemessen. Die dabei entstehenden Messwerte können für das Erstellen eines Ist-Verlaufs verwendet werden. Bei Bedarf kann durch eine auf dem Trägerelement 2.1 integrierte oder alternativ innerhalb der Vorrichtung 1 nachgelagerte Signalkorrektur der Ist-Verlauf derart angepasst werden, dass nur das modulierte Magnetfeld des ferromagnetischen Werkzeugs 4 in der nachfolgenden Signalauswertung untersucht wird.

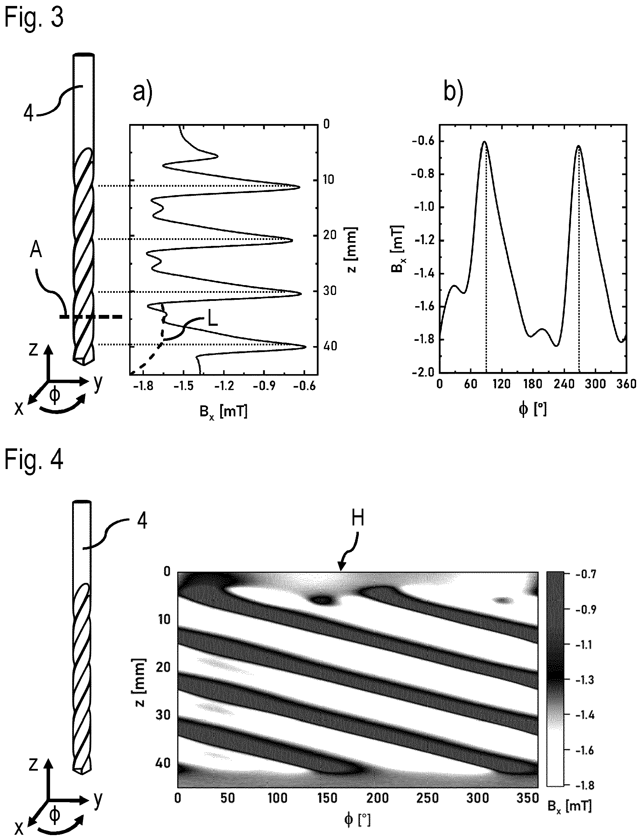

Figur 3 zeigt beispielhaft zwei Ist-Verläufe in Form von zwei Funktionsgraphen, welche während eines Messvorgangs eines ferromagnetischen Vollhartmetall-Bohrers 4 mit 3,4 mm Durchmesser angefertigt wurden. Der ferromagnetische Bohrer 4 wurde sowohl in axialer Richtung z als auch in Umfangs-Richtung φ bei einem Messabstand d = 200 µm vermessen. In den dargestellten Verläufen ist jeweils die Messung der magnetischen Flussdichte Bₓ in radialer Richtung x des Bohrers 4 gezeigt.

Das Bₓ-z-Diagramm in Figur 3a zeigt die Messung in z-Richtung entlang des Bohrers 4 bei einer festen Winkelstellung φ des Bohrers 4. In dem abgebildeten Funktionsgraph treten die Bereiche der Schneidkanten des Bohrers 4 deutlich in Form von vier Peaks bzw. Extrema hervor. Wäre ein Teil des Bohrers 4 abgebrochen, beispielsweise an der Bruchlinie A, würde dies zu einer Signalveränderung führen und der Peak der von unten gesehen ersten Schneide bei z ≈ 40 mm nicht auftreten. Die gestrichelte Linie L kennzeichnet den zu erwartenden Verlauf des Messsignals im Falle eines solchen Werkzeugbruchs. Durch den dargestellten Funktionsgraph können insbesondere Geometrie-Abmessungen oder ein Werkzeugtotalbruch frühzeitig erkannt werden.

Alternativ können die Schneiden des Bohrers 4 auch in Umfangsrichtung φ vermessen werden, wie im in Figur 3b gezeigten Verlauf zu sehen ist. Aus dem φ-Bₓ-Diagramm treten die beiden Schneidkanten des Bohrers 4 an einem bezüglich z konstanten Messpunkt in Form zweier Peaks deutlich hervor. Anhand des gezeigten Funktionsgraphen können beispielsweise die Anzahl der Schneiden, Geometrie-Abmessungen oder Defekte bzw. Ausbrüche des zu vermessenden Werkzeugs besonders gut erfasst werden.

Als weitere Darstellung eignet sich insbesondere auch eine Heatmap H, welche die Informationen der Funktionsgraphen aus Figur 3a und Figur 3b kombiniert darstellt (siehe Figur 4). Darin wird beispielsweise die gemessene magnetische Flussdichte Bₓ als Funktion der Umfangs-Richtung φ und der axialen Richtung z des Bohrers 4 dargestellt. Eine solche Auswertung eignet sich beispielsweise für Detailanalysen eines ferromagnetischen Werkzeugs hinsichtlich der Geometrie-Abmessungen, der Anzahl der Schneiden, dem Material des Bohrers 4 bzw. der Schneidstoffe, der frühzeitigen Erkennung von Werkzeugtotalbruch und insbesondere zur Detektion von Defekten bzw. Ausbrüchen.

Neben dem erläuterten Ausführungsbeispiel der erfindungsgemäßen Vorrichtung gibt es im Rahmen der vorliegenden Erfindung noch weitere Ausgestaltungsmöglichkeiten.

So ist es auch möglich, die erfindungsgemäße Vorrichtung 1 nur in einer Raumrichtung x, y, z zu verfahren. Beispielsweise bei der Vermessung der Schneidkanten einer Wendeschneidplatte im Arbeitsraum einer Drehmaschine wäre eine solche Anordnung eines ferromagnetischen Werkzeugs 4 und der erfindungsgemäßen Vorrichtung 1 denkbar. Die Vorrichtung 1 könnte sich beispielsweise auf einem Schlitten befinden und an die in einem Werkzeughalter eingespannte Wendeschneidplatte herangefahren werden. Eine Auswertung des Messsignals könnte in diesem Fall ebenfalls über charakteristische Verläufe der magnetischen Flussdichte vorgenommen werden. In diesem Fall würde jedoch das bloße Vorhandensein von Extrema im Ist-Verlauf bereits für einen Verschleiß sprechen.

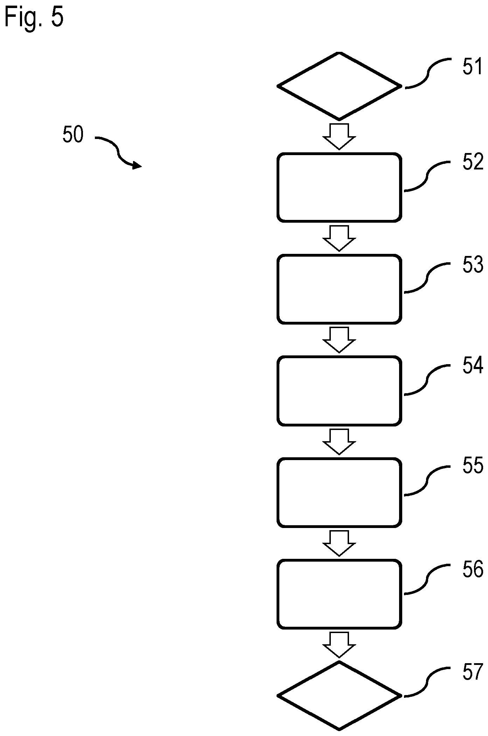

Ein Verfahren zur berührungslosen Bruch- und ergänzend oder alternativ Verschleißüberwachung ist in Fig. 5 als schematisches Ablaufdiagramm 50 dargestellt. Über die Steuerung der Werkzeugmaschine kann ein Programmablauf zur Überprüfung des ferromagnetischen Werkzeugs 4 gestartet bzw. initialisiert (Schritt 51) werden, entweder durch einen Bediener oder automatisiert innerhalb eines Zeitintervalls.

Daraufhin erfolgt ein relatives Annähern 52 des ferromagnetischen Werkzeugs 4 und der Vorrichtung 1, bis der Messabstand d erreicht ist. Beispielsweise indem die Werkzeugmaschine das ferromagnetische Werkzeug 4 im Arbeitsraum der Werkzeugmaschine an die stationär innerhalb des Arbeitsraums angebrachte Vorrichtung 1 verfährt. Das ferromagnetische Werkzeug 4 kann während des gesamten Vorgangs definiert um seine Längsachse relativ rotieren.

In einem darauffolgenden Schritt 53 erfolgt das Einkoppeln eines magnetischen Vorspannfeldes, hervorgerufen durch zumindest einen Magnetfeldgenerator 3 der Vorrichtung 1.

Im Folgeschritt 54 Messen wird das durch das ferromagnetische Werkzeug 4 modulierte Magnetfeld hinsichtlich der magnetischen Flussdichte durch den Sensor 2 vermessen, wobei bei Bedarf zusätzlich eine weitere physikalische Größe erfasst werden kann (z. B. zumindest ein Temperaturwert). Diese Daten bilden anschließend die Datenbasis eines Ist-Verlaufs.

Im Anschluss erfolgt das Auswerten 55 der zuvor ermittelten Messergebnisse aus Schritt 54, wobei innerhalb dieses Schritts auch eine Signalkorrektur vorgenommen wird. Die Auswertung 55 kann dabei automatisiert und computergestützt (z. B. durch ein künstliches neuronales Netz), manuell durch einen Bediener oder aus einer Kombination beider Verarbeitungsmethoden erfolgen.

Im vorletzten Schritt 56 kann das Auswerteergebnis bzw. mehrere Auswerteergebnisse an eine Ausgabeeinheit 68, 68' übergeben werden. Innerhalb der Ausgabeeinheit 68, 68' kann das Auswertergebnis in eine Speichereinheit abgelegt werden und ergänzend oder alternativ an einen Benutzer übermittelt werden. Eine solche Übermittlung kann beispielsweise visuell über einen Bildschirm der Werkzeugmaschine erfolgen, akustisch über eine Audioausgabeeinheit, usw. Abschließend wird in einem Schritt 57 der Programmablauf 50 beendet.

Es ist hierbei zu beachten, dass das ferromagnetische Werkzeug 4 während des Programmablaufs 50 nur während Schritt 54 ("Messen") im Messabstand d - gegebenenfalls relativ um seine Längsachse rotierend - verweilen muss. Während der Folgeschritte 55 bis 57 kann bereits parallel zum in der Ausführung befindlichen Programmablauf 50 ein weiterer Programmablauf durch die Steuerung der Werkzeugmaschine durchgeführt werden, d. h. beispielsweise eine Fortsetzung der Bearbeitung eines Werkstücks mit dem ferromagnetischen Werkzeug 4 erfolgen.

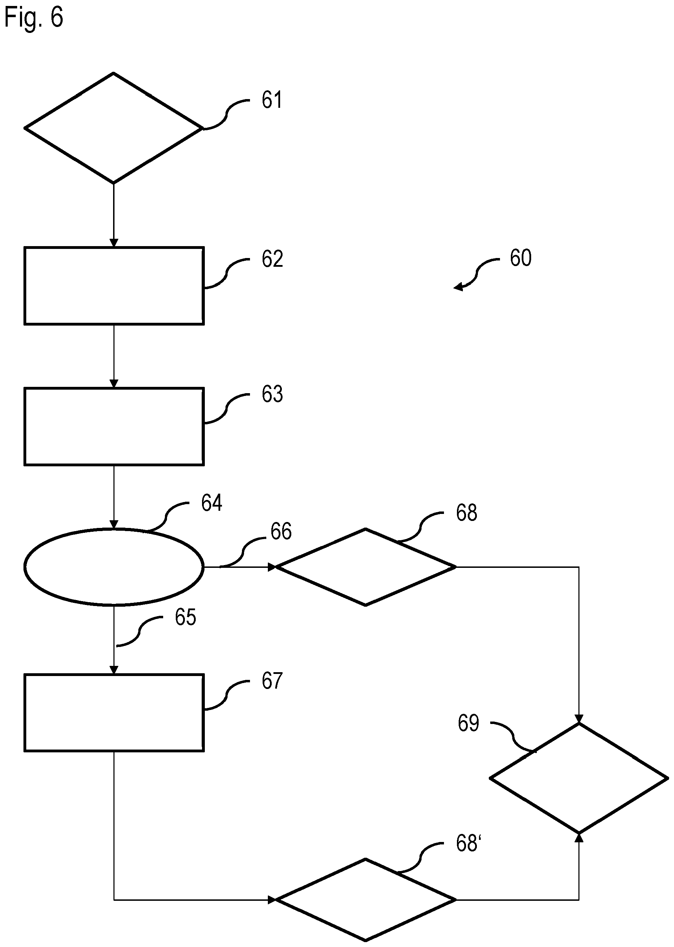

Fig. 6 zeigt ein schematisches Ablaufdiagramm 60 der Teilschritte des in Fig. 5 gezeigten Verfahrensschritts Auswerten 55.

Das Teilmodul Auswertung 61 ist ein Teilelement des Verfahrensschritts Auswerten 55. Sobald das Teilmodul 61 aufgerufen wird, wird ein Teilschritt 62 ausgeführt, welcher aus einer Datenbank Soll-Zustandsinformationen des zu vermessenden ferromagnetischen Werkzeugs 4 abruft, um anschließend daraus einen Soll-Verlauf abzuleiten. Diese Soll-Zustandsinformationen können dabei schon als fertiger Soll-Verlauf vorliegen oder erst noch berechnet bzw. generiert werden. Die Berechnung der Soll-Zustandsinformationen kann beispielsweise auf Basis der Zustandsinformationen eines entsprechenden, unbenutzten ferromagnetischen Werkzeugs und einer in der Speichereinheit hinterlegten Einsatzzeit des ferromagnetischen Werkzeugs 4 erfolgen, sollten keine Soll-Zustandsinformationen einer vorangegangen Messung vorhanden sein.

Der daran anschließende Teilschritt 63 vergleicht nun den in Schritt 54 bestimmten Ist-Verlauf der Messdaten mit dem in Teilschritt 62 abgerufenen oder berechneten Soll-Verlauf, d. h es erfolgt eine Bestimmung des Grads der Abweichung der beiden Verläufe. Dies kann beispielsweise für einzelne, mehrere oder alle Ist- und Soll-Verlaufswerte geschehen. Alternativ kann als Grad der Abweichung ein geeigneter Referenzwert bestimmt werden. Dieser Referenzwert kann beispielsweise die Subtraktion der Integrale von Ist- und Soll-Verlauf umfassen. Zusätzlich können Soll- und Ist-Verlauf dabei normiert sein, insbesondere bezüglich einer weiteren physikalischen Größe, beispielsweise der lokalen Temperaturverteilung im ferromagnetischen Werkzeug 4. Es ist auch denkbar, dass die Bestimmung der Abweichung bezüglich beider Verläufe nur abschnittsweise erfolgt, beispielsweise für Teilabschnitte des ferromagnetischen Werkzeugs 4, die besonders anfällig für Verschleißerscheinungen oder einen Werkzeugbruch sind.

Überschreitet der Grad der Abweichung einen definierten Schwellwert nicht (Nein-Pfad 66), erfolgt keine tiefergehende Analyse der Messwerte und der Ausgabeeinheit 68 wird übermittelt, dass keine Abweichung vorliegt. Eine solche minimale Abweichung kann sich beispielsweise im Rahmen der Messgenauigkeit des Sensors 2 für ein neues und unbenutztes ferromagnetisches Werkzeug 4 ergeben.

Ist hingegen der Grad der Abweichung höher oder gleich dem Schwellwert (Ja-Pfad 65), erfolgt die Durchführung einer Tiefenanalyse (Teilschritt 67) oder alternativ ein Abbruch der Messung bzw. Werkstückbearbeitung. Bei einer solchen Tiefenanalyse werden die Messdaten, Ist-Verlauf, Soll-Verlauf und ergänzend oder alternativ die Abweichung von Soll- und Ist-Verlauf genauer ausgewertet. Insbesondere umfasst die Tiefenanalyse dabei eine Auswertung hinsichtlich des Vorhandenseins und der Klassifizierung von Verschleißformen, Verschleißparameter, Position und Zustand der Schneidkanten, Position und Zustand der Spanräume, der Werkstoffzusammensetzung, der Spananhaftung bzw. Verschmutzung und ergänzend oder alternativ einer weiteren Intensitätsverteilung des ferromagnetischen Werkzeugs 4. Eine solche Tiefenanalyse kann entweder algorithmisch erfolgen, insbesondere durch Verfahren des maschinellen Lernens, oder manuell durch einen Bediener. Auch eine Kombination beider Verfahren ist denkbar. Das Ergebnis oder die Ergebnisse des Teilschritts 67 wird/werden abschließend an die Ausgabeeinheit 68' - z. B. in Form einer Heatmap H - übermittelt und das Teilmodul 61 abschließen beendet (Teilschritt 69).

Bei der Ausgabeeinheit 68, 68' kann es sich um einen Bildschirm einer Werkzeugmaschine handeln. Die Ergebnisse sind dann grafisch aufbereitet, so dass ein Bediener intuitiv versteht, wie es um den aktuellen Zustand des in Benutzung befindlichen ferromagnetischen Werkzeugs 4 steht.

Wird ein Verschleiß oder Bruch des ferromagnetischen Werkzeugs 4 durch die Vorrichtung 1 erkannt, kann es beispielsweise zu einem Stopp des weiteren Bearbeitungsablaufs des Werkstücks kommen und ein Bediener in Form einer visuellen Ausgabe und ergänzend oder alternativ einer Audio-Ausgabe auf das Ereignis hingewiesen werden.

Zusätzlich kann eine Speichereinheit vorgesehen sein, welche historische Daten der Auswertung bzw. der Tiefenanalyse in einem nicht-flüchtigen Speicher abspeichert. Im Fall einer Werkzeugmaschine mit Werkzeugrevolver kann so auf alle Auswertungen bzw. Tiefenanalysen der Vorrichtung 1 für alle im Werkzeugrevolver befindlichen ferromagnetischen Werkzeuge zugegriffen werden. Die Anzeige der Ergebnisse über die Ausgabeeinheit 68, 68' ist dann nicht nur auf das in Benutzung befindliche ferromagnetische Werkzeug 4 beschränkt.

## Patentansprüche

1. Vorrichtung (1) zur berührungslosen Bruch- und / oder VerschleißÜberwachung von ferromagnetischen Werkzeugen (4) in einer Werkzeugmaschine, umfassend einen Sensor (2) und zumindest einen Magnetfeldgenerator (3),
wobei die Vorrichtung (1) mittels des Sensors (2) lokale Änderungen der magnetischen Flussdichte (B) in einem Messabstand (d) messen und mittels einer elektronischen Auswerteeinheit auswerten kann, wobei der Sensor (2) so ausgebildet ist, dass
• seine längste Ausdehnung in eine Raumrichtung (x, y, z) höchstens 500 µm beträgt, und
• durch den Sensor (2) ein Magnetfeld in zumindest eine Raumrichtung (x, y, z) messbar ist.

2. Vorrichtung (1) nach Anspruch 1, wobei der zumindest eine Magnetfeldgenerator (3) und der Sensor (2) entlang einer Geraden angeordnet sind, welche parallel oder orthogonal zur Längsachse des ferromagnetischen Werkzeugs (4) verläuft.

3. Vorrichtung (1) nach einem der vorhergehenden Ansprüche, wobei die Vorrichtung (1) zusätzlich ein Gehäuse (5) umfasst, wobei der Sensor (2) und der zumindest eine Magnetfeldgenerator (3) derart im Gehäuse (5) angeordnet sind, dass dessen magnetisches Vorspannfeld durch den Sensor (2) hindurch und in das ferromagnetische Werkzeug (4) einkoppelbar ist.

4. Vorrichtung (1) nach einem der vorhergehenden Ansprüche, wobei der Sensor (2) zumindest ein Hall-Element (2.1) und / oder zumindest ein TMR-Element (2.1`) umfasst.

5. Vorrichtung (1) nach einem der vorhergehenden Ansprüche, wobei der Sensor (2) neben einer Messung der magnetischen Flussdichte (B) zumindest eine weitere physikalische Größe erfassen kann.

6. Vorrichtung (1) nach einem der vorhergehenden Ansprüche, wobei die Vorrichtung (1) ausgebildet ist, um Verschmutzungen an der Vorrichtung (1) und / oder am ferromagnetischen Werkzeug (4) mittels Druckluft und / oder magnetischem Wechselfeld zu entfernen.

7. Verfahren zur berührungslosen Bruch- und / oder Verschleißüberwachung eines ferromagnetischen Werkzeugs (4) in einer Werkzeugmaschine durch eine Vorrichtung (1) umfassend einen punktförmig messenden Sensor (2) und zumindest einen Magnetfeldgenerator (3), mit folgenden Schritten:
• relatives Annähern von ferromagnetischem Werkzeug (4) und der Vorrichtung (1);
• Einkopplung eines magnetischen Vorspannfelds in das ferromagnetische Werkzeug (4),
• Messung der magnetischen Flussdichte des durch das ferromagnetische Werkzeug (4) modulierten Magnetfeldes in zumindest einer Raumrichtung (x, y z);
• Signalkorrektur und Signalauswertung zur Bestimmung der Geometrie des ferromagnetischen Werkzeugs (4).

8. Verfahren nach Anspruch 7, wobei die Signalkorrektur und die Signalauswertung elektronisch innerhalb der Vorrichtung (1) erfolgt.

9. Verfahren nach Anspruch 7 oder 8, wobei das Ergebnis der Signalauswertung an eine Speichereinheit und / oder eine Ausgabeeinheit übermittelt wird.

10. Verfahren nach einem der Ansprüche 7 bis 9, wobei zusätzlich zumindest eine der folgenden Größen bestimmt wird:
• Raumposition des ferromagnetischen Werkzeugs (4),
• Abstand (d) des ferromagnetischen Werkzeugs (4) zum Sensor (2),
• Winkelstellung (φ) des ferromagnetischen Werkzeugs (4),
• Rotationsgeschwindigkeit des ferromagnetischen Werkzeugs (4),
• Durchmesser und / oder Länge des ferromagnetischen Werkzeugs (4),
• Temperatur des ferromagnetischen Werkzeugs (4).

11. Verfahren nach einem der Ansprüche 7 bis 10, wobei sich
• bei stationärer Anordnung der Vorrichtung (1) das ferromagnetische Werkzeug (4) während des Annäherungsvorgangs und / oder des Messvorgangs relativ in einer Raumrichtung (x,y,z) bewegt und dabei um die eigene Längsachse rotiert, oder
• bei stationärer Anordnung des ferromagnetischen Werkzeugs (4), die Vorrichtung (1) während des Annäherungsvorgangs und / oder des Messvorgangs relativ in einer Raumrichtung (x,y,z) und/oder auf einer Bahnkurve um das ferromagnetische Werkzeug (4) bewegt, wobei das ferromagnetische Werkzeug (4) um die eigene Längsachse rotiert.

12. Verfahren nach einem der Ansprüche 7 bis 11, wobei das Auswerten folgende Schritte umfasst:
• Abrufen oder Berechnen eines Soll-Verlaufs zumindest einer Soll-Größe des ferromagnetischen Werkzeugs (4),
• Vergleichen des abgerufenen oder berechneten Soll-Verlaufs mit einem gemessenen Ist-Verlauf zumindest einer Ist-Größe des ferromagnetischen Werkzeugs (4),
• Bei Feststellung einer Abweichung:
- Bestimmung des Grads der Abweichung und
- bei Überschreien eines definierten Schwellwertes: Durchführung einer Tiefenanalyse der Messung und / oder Abbruch der Messung und / oder Abbruch der Werkstückbearbeitung.

13. Verfahren nach Anspruch 12, wobei der Schwellwert zusätzlich zumindest eine der Größen aus Anspruch 10 berücksichtigt.

14. Verfahren nach einem der vorhergehenden Ansprüche 7 bis 13, wobei die Daten bei der Tiefenanalyse hinsichtlich Verschleißformen, Verschleißparameter, Position und Zustand der Schneidkanten, Position und Zustand der Spanräume, der Werkstoffzusammensetzung, der Spananhaftung und / oder einer Intensitätsverteilung des ferromagnetischen Werkzeugs (4) computergestützt ausgewertet werden.
